# EUROPEAN PATENT SPECIFICATION

(11) **EP 1 121 536 B1**
(45) Date of publication and mention of the grant of the patent: **10.11.2004**
(21) Application number: 99949472.7
(22) Date of filing: 13.10.1999
(51) Int. Cl.: F16C 19/16, F16C 33/60, F16C 33/61

(54) **ASYMMETRIC ANGULAR CONTACT BEARING**
ASSYMETRISCHES SCHRÄGWALZLAGER
COUSSINET DE CONTACT ANGULAIRE ASYMETRIQUE

(30) Priority: 13.10.1998 NL 1010310
(43) Date of publication of application: 08.08.2001
(73) Proprietor: SKF Engineering & Research Centre B.V., 3430 DT Nieuwegein (NL)
(72) Inventor: GURKA, Jiri, A-4441 Behamberg (AT); MOSER, Alfred, A-4400 Steyr (AT); SCHWEITZER, Ferdinand, A-3352 St. Peter (AT); ANTENSTEINER, Manfred, A-4522 Sierning (AT); DRUET, Clair, F-73420 Drumettaz Clarafond (FR); FUCKS, Thomas, D-97520 Röthlein (DE); KAPAAN, Hendrikus, Jan, NL-3435 DM Nieuwegein (NL)
(74) Representative: van Westenbrugge, Andries
(86) International application number: PCT/NL1999/000632
(87) International publication number: WO 2000/022310

(56) References cited:
- EP-A- 0 050 213
- EP-A- 0 691 483
- WO-A-90/15936
- AU-B- 495 059
- DE-A- 3 046 812
- DE-A- 4 324 838
- DE-B- 1 303 659
- FR-A- 1 156 112
- FR-A- 1 581 781
- US-A- 1 360 430
- US-A- 1 970 449
- US-A- 4 707 151
- US-A- 5 284 394

## Description

The invention is related to a screw actuator, comprising a screw mechanism, a housing and a bearing comprising an inner ring or shaft and an outer ring each defining a raceway as well as a series of rolling elements which are in rolling contact with the raceways, wherein the rings respectively ring and shaft on the one hand, and each rolling element on the other hand engage each other at four contact points, two contact lines being defmed by the two pairs of diametrically opposite contact points.

Such a screw actuator whereby the inner ring of the bearing is mounted on the nut of the screw mechanism is disclosed in WO-A-9603301. Said prior art screw actuator comprises a cross roller bearing by means of which the axial forces are transferred between the housing and the screw mechanism. The prior art screw actuator furthermore is part of a brake calliper, which means that the main axial loadings on the screw mechanism, and thereby on the bearing, are predominantly in one direction. Said main axial loading concerned is related to the displacement of the brake pads onto the brake disc. The opposite displacement is for relieving the braking action between brake pads and brake disc, and gives rise to loadings of a much lower magnitude.

The object of the invention is to provide a screw actuator which is particularly fit for such main axial loadings in one direction, which is more versatile as to assembling and lay-out and which can be produced at lower cost. Said object is achieved in that at least one ring is provided with a high shoulder and a low shoulder which border the raceway of said ring, the low shoulder being provided with a circumferential groove, a ring member being accommodated in said groove for contacting the rolling elements, one of said contact lines defining a contact angle with respect to the axis of the bearing which is relatively small, and the other contact line defining a contact angle with respect to the axis of the bearing which is relatively large, and in that the outer ring of the bearing engages the screw of the screw mechanism or is an integral part of the screw.

An asymmetric angular contact ball bearing per se is disclosed in DE-A-3046812. However, said prior art bearing has solid inner and outer rings, which means that the amount of rolling elements, which can be accommodated between said rings is limited.

A further asymmetric angular contact ball bearing is disclosed in FR-A-1150112. Said prior art bearing is part of a carriage wheel support, and has an inner ring provided with a groove which accommodates a ring member.

In a further development of the screw actuator according to the invention, the raceway of the bearing is integrated in a central support shaft connected to the housing.

The screw mechanism is a roller or ball screw, the nut of which is carried out as a sleeve or piston which is slidably but non-rotatably accommodated in a cylinder space in the housing.

The prior art screw actuator as disclosed in WO-A-9603301 also comprises a screw mechanism, a housing and a bearing comprising an inner ring and an outer ring each defining a raceway as well as a series of rolling elements which are in rolling contact with the raceways, the inner ring of the bearing engaging the nut of the screw mechanism or being an integral part of said nut, wherein the rings on the one hand, and each rolling element on the other hand engage each other at four contact points, two contact lines being defined by the two pairs of diametrically opposite contact points.

According to the invention, at least one ring is provided with a high shoulder and a low shoulder which border the raceway of said ring, the low shoulder is provided with a circumferential groove, a ring member being accommodated in said groove for contacting the rolling elements, one of said contact lines defining a contact angle with respect to the axis of the bearing which is relatively small, and the other contact line defining a contact angle with respect to the axis of the bearing which is relatively large.

The low shoulder may be equipped with a seal or shield. The pair of shoulders opposite the pair of shoulders one of which has a ring member, enclose a gap defining a labyrinth seal. Sealing can also take place with a seal or shield.

Preferably, the outer ring is supported with respect to the housing, and the screw is axially displaceable, but non-rotatable.

The invention will now be explained further with reference to the embodiments shown in the figures.
Figure 1 shows a first embodiment of a screw actuator comprising a bearing according to the invention.
Figure 2 shows a second embodiment.

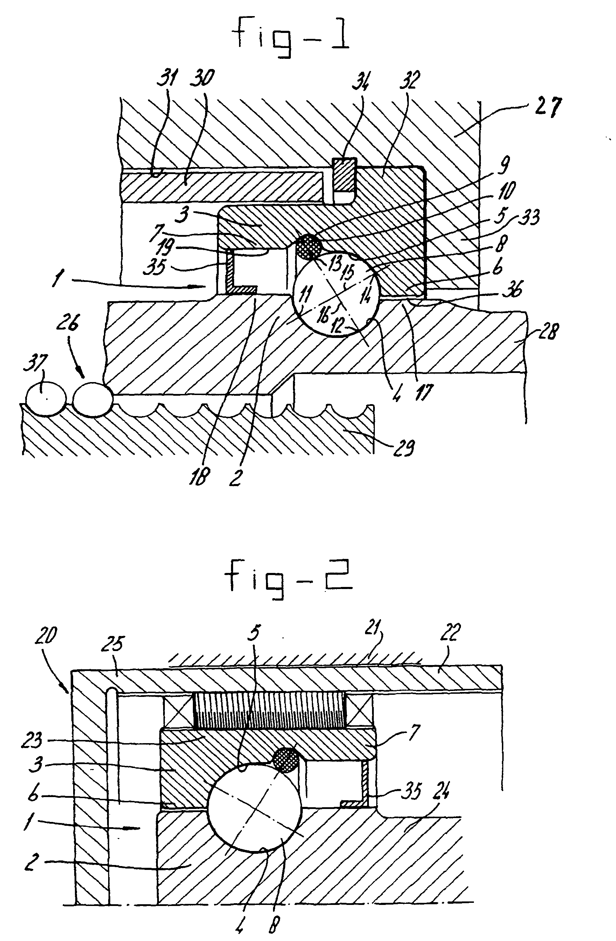

The screw actuator, part of which it is shown in figure 1, comprises a screw actuator 26 which by means of bearing 1 is supported in a housing 27. The screw actuator 26 comprises in particular a rotatable, but axially non-displaceable held nut 28, and an axial displaceable, but not-rotatable screw 29.

The nut 28 and screw 29 engage each other by means of balls 37, accommodated in appropriated screw windings in the nut 28 and screw 29.

The nut 28 is connected to a drive (not shown), and is integrated with the inner ring 2 of the bearing 1. The outer ring 3 of said bearing has a flange 32 which is held captive in the housing 27 between the breast 33 and the clipring 34.

Furthermore, the screw 29 is connected to a slidable but non-rotatable piston 30, which is held in a cylinder space 31 in the house 27.

The outer ring 3 of the bearing 1 has a high shoulder 6 and a low shoulder 7, in which low shoulder 7 a groove 9 has been applied accommodating a lock ring 10.

As a result of this layout, the four contact point 11-14 define asymmetric contact lines 15, 16. The contact line 15, between the contact points 11 and 14, has a relatively small angle with respect to the axis of the screw mechanism 26, in such a way that the bearing 1 is able to transfer axial compressive forces which are exerted on the left end of the screw 29.

The ring holds the rolling elements, or balls 8, captive within the bearing 1. In this direction, the bearing is not loaded to a significant degree. In case the actuator in question is used as an actuator for a disc-brake, the main axial loadings are constituted by the compressive forces on the screw 29 as addressed above. The forces in the opposite direction, which are to be transferred via contact line 16 defined between contact points 12, 13, is only for releasing the brake and are of a lower magnitude.

Between the high shoulder 6 or the outer ring 3, and the shoulder 17*of the inner ring 2 a gap 36 is available which constitutes a labyrinth seal. The larger gap between the low shoulder 7 and the shoulder 18 is closed by means of a seal or shield 35.

The embodiment of figure 2 comprises a similar bearing 1, the inner ring 2 of which now however being integrated in a central support shaft 24 which is connected to the housing 21. The outer ring 3 is integrated with the screw 23 of the screw mechanism 20. Said screw mechanism 20 furthermore comprises a nut 22, carried out as a piston 25 which is slidably but non rotatably held in the housing 21. The main components of bearing 1 are similar to the bearing 1 in figure 1.

## Claims

1. Screw actuator, comprising a screw mechanism (20), a housing (21) and a bearing (1) comprising an inner ring or shaft (2) and an outer ring (3) each defining a raceway (4, 5) as well as a series of rolling elements (8) which are in rolling contact with the raceways (4, 5), wherein the rings (2,3) respectively ring and shaft on the one hand, and each rolling element (8) on the other hand engage each other at four contact points (11-14), two contact lines (15, 16) being defined by the two pairs of diametrically opposite contact points (11-14), **characterized in that** at least one ring (3) is provided with a high shoulder (6) and a low shoulder (7) which border the raceway (5) of said ring (3), the low shoulder (7) being provided with a circumferential groove (9), a ring member (10) being accommodated in said groove (9) for contacting the rolling elements (8), one of said contact lines (15) defining a contact angle with respect to the axis of the bearing (1) which is relatively small, and the other contact line (16) defining a contact angle with respect to the axis of the bearing (1) which is relatively large, and **in that** the outer ring (3) of the bearing (1) engages the screw (23) of the screw mechanism (20) or is an integral part of the screw (23).

2. Screw actuator according to claim 1, wherein the inner raceway (4) of the bearing (1) is integrated in a central support shaft (24) connected to the housing (21).

3. Screw actuator according to claim 1 or 2, wherein the screw mechanism (20) is a roller or ball screw, the nut (22) of which is carried out as a sleeve or piston (25) which is slidably but non-rotatably accommodated in a cylinder space in the housing (21).

4. Screw actuator, comprising a screw mechanism (26), a housing (27) and a bearing (1) comprising an inner ring (2) and an outer ring (3) each defining a raceway (4, 5) as well as a series of rolling elements (8) which are in rolling contact with the raceways (5), the inner ring (2) of the bearing (1) engaging the nut (28) of the screw mechanism (26) or being an integral part of said nut (28), wherein the rings (2, 3) on the one hand, and each rolling element (8) on the other hand engage each other at four contact points (11-14), two contact lines (15, 16) being defined by the two pairs of diametrically opposite contact points (11-14), **characterized in that** at least one ring (3) is provided with a high shoulder (6) and a low shoulder (7) which border the raceway (5) of said ring (3), the low shoulder (7) being provided with a circumferential groove (9), a ring member (10) being accommodated in said groove (9) for contacting the rolling elements (8), one of said contact lines (15) defining a contact angle with respect to the axis of the bearing (1) which is relatively small, and the other contact line (16) defining a contact angle with respect to the axis of the bearing (1) which is relatively large.

5. Screw actuator according to claim 4, wherein the outer ring (3) is supported with respect to the housing (27), and the screw (29) is axially displaceable, but non-rotatable.

6. Screw actuator according to any of the preceding claims, wherein the bearing (1) is a full complement bearing.

## Patentansprüche

1. Schraubenaktuator, wobei der Schraubenaktuator einen Verschraubungsmechanismus (20) aufweist, sowie ein Gehäuse (21) und ein Lager (1), wobei das Lager einen inneren Ring oder eine Achse (2) und einen äußeren Ring (3) aufweist, wobei beide jeweils eine Lauffläche (4, 5) aufweisen, wobei das Lager (1) weiterhin eine Mehrzahl von Rollelementen (8) aufweist, wobei die Rollelemente (8) in Rollkontakt mit den Laufflächen (4, 5) stehen, wobei die Ringe (2, 3) bzw. der Ring (3) und die Achse (2) auf der einen Seite und jedes Rollelement (8) auf der anderen Seite einander in vier Kontaktpunkten (11 bis 14) berühren, wobei zwei Kontaktlinien (15, 16) durch die zwei Paare diametral gegenüberliegender Kontaktpunkte (11 bis 14) definiert sind, **dadurch gekennzeichnet, dass** mindestens ein Ring (3) eine hohe Schulter (6) und eine niedrige Schulter (7) aufweist, wobei die Schultern (6, 7) die Lauffläche (5) des Rings (3) begrenzen, wobei die niedrige Schulter (7) eine umlaufende Nut (9) aufweist, wobei ein Ringelement (10) in der Nut (9) zur Kontaktierung der Rollelemente (8) angeordnet ist, wobei eine der Kontaktlinien (15) zur Achse des Lagers (1) einen relativ kleinen Kontaktwinkel bildet, und wobei die andere Kontaktlinie (16) relativ zur Achse des Lagers (1) einen relativ großen Kontaktwinkel bildet, und wobei der äußere Ring (3) des Lagers (1) die Schraube (23) des Verschraubungsmechanismus (20) umfasst oder einen integralen Bestandteil der Schraube (23) bildet.

2. Schraubenaktuator gemäß Anspruch 1, wobei die innere Lauffläche (4) des Lagers (1) integriert ist in einen zentralen Trägerschaft (24), wobei der zentrale Trägerschaft (24) mit dem Gehäuse (21) verbunden ist.

3. Schraubenaktuator gemäß einem der Ansprüche 1 oder 2, wobei der Verschraubungsmechanismus (20) eine Zylinder- oder Kugelumlaufspindel ist, deren Gegenmutter (22) als Hülse oder Kolben (25) ausgeführt ist, welche bzw. welcher gleitend aber nicht rotierbar gelagert ist in einem zylindrischen Raum des Gehäuses (21).

4. Schraubenaktuator, wobei der Schraubenaktuator einen Verschraubungsmechanismus (26), ein Gehäuse (27) und ein Lager (1) aufweist, wobei das Lager (1) einen inneren Ring (2) und einen äußeren Ring (3) aufweist, wobei der innere Ring (2) und der äußere Ring (3) je eine Lauffläche (4, 5) aufweisen, wobei das Lager weiterhin eine Mehrzahl von Rollelementen (8) aufweist, wobei die Rollelemente (8) in Rollkontakt mit den Laufflächen (5) stehen, wobei der innere Ring (2) des Lagers (1) die Gegenmutter (28) des Verschraubungsmechanismus (26) umfasst oder einen integralen Bestandteil dieser Gegenmutter (28) bildet, wobei die Ringe (2, 3) auf der einen Seite und jedes Rollelement (8) auf der anderen Seite einander in vier Kontaktpunkten (11 bis 14) berühren, wobei zwei Kontaktlinien (15, 16) durch die zwei Paare einander diametral gegenüberliegender Kontaktpunkte (11 bis 14) definiert sind, **dadurch gekennzeichnet, dass** mindestens ein Ring (3) eine hohe Schulter (6) und eine niedrige Schulter (7) aufweist, wobei die Schultern (6, 7) die Lauffläche (5) des Rings (3) begrenzen, wobei die niedrige Schulter (7) eine umlaufende Nut (9) aufweist, wobei ein Ringelement (10) zur Kontaktierung der Rollelemente (8) in die Nut (9) eingebracht ist, wobei eine der Kontaktlinien (15) relativ zur Achse des Lagers (1) einen relativ kleinen Kontaktwinkel bildet, und wobei die andere Kontaktlinie (16) relativ zur Achse des Lagers (1) einen relativ großen Kontaktwinkel bildet.

5. Schraubenaktuator gemäß Anspruch 4, wobei der äußere Ring (3) relativ zum Gehäuse (27) abgestützt ist, und wobei die Schraube (29) linear verschiebbar, jedoch nicht drehbar ist.

6. Schraubenaktuator gemäß einem der vorhergehenden Ansprüche, wobei das Lager (1) ein vollrolliges Lager (1) ist.

## Revendications

1. Dispositif d'actionnement à vis, comportant un mécanisme à vis (20), un logement (21) et un palier (1) comportant une bague interne ou un arbre (2) et une bague externe (3) définissant chacun une piste (4, 5) ainsi qu'une série d'éléments de roulement (8) qui sont en contact avec les pistes (4, 5), les bagues (2, 3) respectivement bague et arbre d'une part, et chaque élément de roulement (8) d'autre part s'engageant l'un l'autre au niveau de quatre points de contact (11 à 14), deux lignes de contact (15, 16) étant définies par les deux paires de points de contact diamétralement opposées (11 à 14), **caractérisé en ce qu'**au moins une bague (3) est pourvue d'un épaulement haut (6) et d'un épaulement bas (7) qui bordent la piste (5) de ladite bague (3), l'épaulement bas (7) étant pourvu d'une rainure circonférentielle (9), un élément de bague (10) étant logé dans ladite rainure (9) afin de venir en contact avec les éléments de roulement (8), une desdites lignes de contact (15) définissant un angle de contact par rapport à l'axe du palier (1) qui est relativement faible, et l'autre ligne de contact (16) définissant un angle de contact par rapport à l'axe du palier (1) qui est relativement grand, et **en ce que** la bague externe (3) du palier (1) engage la vis (23) du mécanisme à vis (20) ou fait partie intégrante de la vis (23).

2. Dispositif d'actionnement à vis selon la revendication 1, dans lequel la piste interne (4) du palier (1) est intégrée dans un arbre de support central (24) relié au logement (21).

3. Dispositif d'actionnement à vis selon la revendication 1 ou 2, dans lequel le mécanisme à vis (20) est une vis à billes ou à rouleaux, dont l'écrou (22) est sous la forme d'un manchon ou d'un piston (25) qui est logé de façon coulissante mais non rotative dans un espace de cylindre dans le logement (21).

4. Dispositif d'actionnement à vis, comportant un mécanisme à vis (26), un logement (27) et un palier (1) comportant une bague interne (2) et une bague externe (3) définissant chacune une piste (4, 5) ainsi qu'une série d'éléments de roulement (8) qui sont en contact avec les pistes (4, 5), la bague interne (2) du palier (1) engageant l'écrou (28) du mécanisme à vis (26) ou faisant partie intégrante dudit écrou (28), les bagues (2, 3) d'une part, et chaque élément de roulement (8) d'autre part s'engageant l'un l'autre au niveau de quatre points de contact (11 à 14), deux lignes de contact (15, 16) étant définies par les deux paires de points de contact diamétralement opposées (11 à 14), **caractérisé en ce qu'**au moins une bague (3) est pourvue d'un épaulement haut (6) et d'un épaulement bas (7) qui bordent la piste (5) de ladite bague (3), l'épaulement bas (7) étant pourvu d'une rainure circonférentielle (9), un élément de bague (10) étant logé dans ladite rainure (9) afin de venir en contact avec les éléments de roulement (8), une desdites lignes de contact (15) définissant un angle de contact par rapport à l'axe du palier (1) qui est relativement faible, et l'autre ligne de contact (16) définissant un angle de contact par rapport à l'axe du palier (1) qui est relativement grand.

5. Dispositif d'actionnement à vis selon la revendication 4, dans lequel la bague externe (3) est supportée par rapport au logement (27), et la vis (29) peut être déplacée axialement, mais sans rotation.

6. Dispositif d'actionnement à vis selon l'une quelconque des revendications précédentes, dans lequel le palier (1) est un palier complémentaire.
